# EUROPEAN PATENT APPLICATION

(11) **EP 3 444 316 A1**
(43) Date of publication of application: **20.02.2019**
(21) Application number: 17382572.0
(22) Date of filing: 16.08.2017
(51) Int. Cl.: C09K 11/02, C08G 18/04

(54) **POLYTHIOURETHANE (METH)ACRYLATE MATRIX CONTAINING NANOCRYSTALS**

(71) Applicant: Henkel AG & Co. KGaA, 40589 Düsseldorf (DE)
(72) Inventor: GÖTHEL, Frank, 09125 Chemnitz (DE); CARRETÉ, Àlex, 08015 Barcelona (ES); RODRÍGUEZ, Denis, 36213 Vigo (Pontevedra) (ES); SMITH, Daniel, Rotherham, South Yorkshire S60 2NA (GB); MENDIZABAL ZALACAIN, Julen, 08029 Barcelona (ES)

(57) **Abstract**

The present invention provides a nanocrystal composite comprising a) a plurality of nanocrystals comprising a core comprising a metal or a semiconductive compound or a mixture thereof and at least one ligand, wherein said core is surrounded by at least one ligand, b) a polymeric matrix, wherein said polymeric matrix is formed by polymerisation of at least one (meth) acrylate monomer having a functionality from 1 to 10 and a polythiol compound having a functionality from 2 to 10 and an polyisocyanate compound having a functionality from 2 to 4.

## Description

### Technical field of the invention

The present invention relates to a nanocrystal composite comprising nanocrystals embedded in a matrix formed by polymerisation of at least one (meth)acrylate monomer, a polythiol compound and a polyisocyanate compound. Composites of the present invention provide improved thermal and photo thermal stability to the nanocrystals.

### Background of the invention

Semiconductor nanocrystals can be used as light down-converters, i.e., shorter wavelength light is converted to longer wavelength light. The nanocrystal (NC) composites are used in a broad range of applications including displays, lighting, security inks, bio-labelling and solar concentrators. In all the cases, the NC composites are exposed to a certain light flux and temperature. The exposure of the NC composites to photons and temperature under the presence of air and moisture causes decrease of the optical properties of the composite.

NC composites are used in light down-conversion applications. The state of the art NC composites degrade by exposure to temperature and photons over time. To improve the stability of the NCs, the composites need an additional protection against oxygen and moisture e.g. by a high performance barrier film or glass encapsulation. To avoid the presence of air and moisture in the encapsulated NC composite, the manufacturing has to be performed under inert atmosphere.

In one approach the NCs are embedded in an epoxy-amine resin, which is placed between barrier layers. However, this approach leads to thicker products and incurs additional costs since the barrier layers are sophisticated organic-inorganic multilayers and the product needs to be manufactured in oxygen/moisture free environment. Despite the barrier layers, oxygen and moisture still penetrate through the unprotected edges of the product leading to degradation in these areas.

In another approach, the NCs are embedded in an acrylic polymerizable formulation, and subsequently, the formed NC composite is encapsulated inside a glass tube. This process requires a sophisticated manufacturing line operating under oxygen/moisture free environment. Such fragile products require a modification of the display architecture, which further increases costs.

Commonly used polymeric matrices in NC composites in down-conversion are based on (meth)acrylates, allyl or epoxy resins. Polymer systems initiated by UV irradiation have been preferred for large scale film manufacturing. However, none of (meth)acrylates, allyl or epoxy resin based matrices described in the art provide enough stability to the NCs under the operating conditions (photon flux, high temperature, ambient atmosphere). In most of the cases an additional high performance barrier film is needed to prevent the permeation of oxygen and moisture inside the polymeric matrix, which increases the cost and thickness of such NC composite products.

In a further approach, thiols have been used, as a part of the polymeric matrix for NC composites. Thiols have been found to be beneficial for the thermal stability of the matrix, broadening the range of matrix chemistries available. Furthermore, the thiols enable a good NC dispersion. However, degradation caused by photons cannot be prevented completely in combination with state of the art polymeric matrices.

Therefore, there is still a need for polymeric matrices, which provide improved thermal and photo thermal stability to the NCs, while reducing manufacturing costs, and space required in the implementation of the NC composite in a light down-conversion device.

### Short description of figures

Figure 1 illustrates the performance of nanocomposites based on different chemistries containing CdSe/ZnS NC.
Figure 2 illustrates that photothermal and thermal stability of the polythiourethane (meth)acrylate NC composites may depend on the ratio of the (meth-)acrylate(s), polyisocyanate(s) and the polythiol(s) used.

### Summary of the invention

The present invention relates to a nanocrystal composite comprising a) a plurality of nanocrystals comprising a core comprising a metal or a semiconductive compound or a mixture thereof and at least one ligand, wherein said core is surrounded by at least one ligand, and b) a polymeric matrix, wherein said polymeric matrix is formed by polymerisation of at least one (meth)acrylate monomer having a functionality from 1 to 10 and a polythiol compound having a functionality from 2 to 10 and a polyisocyanate compound having a functionality from 2 to 4.

The present invention relates also to a cured nanocrystal composite according to the present invention.

The present invention encompasses a product comprising a nanocrystal composite according to the present invention, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

Further, the present invention encompasses the use of nanocrystal composite according to the present invention as a source of photoluminescence.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skill in the art to which this invention belongs to. By means of further guidance, term definitions are included to better appreciate the teaching of the present invention.

The present invention relates to a NC composites comprising a polythiourethane (meth)acrylate matrix, which itself acts as a protection to the NCs. In addition, in some embodiments, the present invention uses thinner, low performance barrier films, in order to further enhance thermal and photothermal properties. This leads to reduced material and manufacturing costs. Furthermore, less space will be required in the implementation of the NC composite in a light down-conversion device.

The use of a polythiourethane (meth)acrylate matrix according to the present invention provides improved thermal and photothermal stability to NCs and it can be prepared in air.

A NC composite according to the present invention comprises a plurality of NCs comprising a core comprising a metal or a semiconductive compound or a mixture thereof and at least one ligand, wherein said core is surrounded by at least one ligand, b) a polymeric matrix, wherein said polymeric matrix is formed by polymerisation of at least one (meth)acrylate monomer having a functionality from 1 to 10 and a polythiol compound having a functionality from 2 to 10 and a polyisocyanate compound having a functionality from 2 to 4.

A NC composite according to the present invention comprises a plurality of NCs comprising a core comprising a metal or a semiconductive compound or a mixture thereof.

The core of the NCs according to the present invention has a structure including the core alone or the core and one or more shell(s) surrounding the core. Each shell may have a structure comprising one or more layers, meaning that each shell may have monolayer or multilayer structure. Each layer may have a single composition or an alloy or concentration gradient.

Preferably, the size of the core of the NCs according to the present invention is less than 100 nm, more preferably less than 50, more preferably less than 10, however, preferably the core is larger than 1 nm. The particle size is measured by using transmission electron microscopy (TEM).

The shape of the NC can be chosen from a broad range of geometries. Preferably the shape of the core of the NCs according to the present invention is spherical, rectangular, rod or triangle shape.

The core of the NCs comprises a metal or semiconductive compound or a mixture thereof, is composed of elements selected from combination of one or more different groups of the periodic table.

Preferably the metal or semiconductive compound is combination of one or more elements selected from the group IV; one or more elements selected from the groups II and VI; one or more elements selected from the groups III and V; one or more elements selected from the groups IV and VI; one or more elements selected from the groups I and III and VI or a combination thereof.

More preferably the metal or semiconductive compound is selected from the group consisting of Si, Ge, SiC, SiGe, CdS, CdSe, CdTe, ZnS, ZnSe ZnTe, ZnO, HgS, HgSe, HgTe, MgS, MgSe, GaN, GaP, GaSb, AlN, AlP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂, AgGaSe₂ and mixtures thereof. Even more preferably the metal or semiconductive compound is selected from group consisting of CdSe, InP and mixtures thereof.

Above mentioned preferred metal or semiconductive compounds provide better optical properties.

Preferably, NCs according to the present invention have a particle diameter (e.g. largest particle diameter, including core and shell) ranging from 1 nm to 100 nm, preferably from 1 nm to 50 nm and more preferably from 1 nm to 15 nm. The particle size is measured by using transmission electron microscopy (TEM).

In one embodiment, the core of the NCs according to the present invention has a structure comprising a core and at least one monolayer or multilayer shell.

Yet, in another embodiment, the core of the NCs according to the present invention has a structure comprising a core and at least two monolayer and/or multilayer shells.

The shell comprises also a metal or semiconductor material, and therefore, all material listed above to be suitable for use as a core is also suitable for use as a shell material. In one preferred embodiment the shell comprises ZnS, ZnSe or CdS.

In one embodiment according to the present invention, the NCs may be further encapsulated in inorganic oxide shells, such as silica or alumina to protect NCs from air and moisture.

The core (including the shell layer(s) if present) of the NCs is surrounded by at least one ligand. Preferably, the whole surface of the NCs is covered by ligands. It is believed by the theory that when the whole surface of the NC is covered by ligands the optical performance of the NC is better.

Suitable ligands for use in the present invention are alkyl phosphines, alkyl phosphine oxides, amines, thiols, polythiols, carboxylic acids and similar compounds and mixtures thereof.

Examples of suitable alkyl phosphines for use in the present invention as a ligand are tri-n-octylphosphine, trishydroxylpropylphosphine, tributylphosphine, tri(dodecyl)phosphine, dibutyl-phosphite, tributyl phosphite, trioctadecyl phosphite, trilauryl phosphite, tris(tridecyl) phosphite, triisodecyl phosphite, bis(2-ethylhexyl)phosphate, tris(tridecyl) phosphate and mixtures thereof.

Example of suitable alkyl phosphine oxides for use in the present invention as a ligand is tri-n-octylphosphine oxide.

Examples of suitable amines for use in the present invention as a ligand are oleylamine, hexadecylamine, octadecylamine, bis(2-ethylhexyl)amine, dioctylamine, trioctylamine, octylamine, dodecylamine/laurylamine, didodecylamine, tridodecylamine, dioctadecylamine, trioctadecylamine, poly(propylene glycol) bis(2-amino propyl ether) and mixtures thereof.

Examples of suitable thiol for use in the present invention as a ligand is 1-dodecanethiol.

Examples of suitable polythiols for use in the present invention as a ligand are pentaerythritol tetrakis (3-mercaptobutylate), pentaerythritol tetrakis(3-mercaptopropionate), trimethylolpropane tri(3-mercaptopropionate), tris[2-(3-mercaptopropionyloxy) ethyl]isocyanurate, dipenta- erythritol hexakis(3-mercaptopropionate), ethoxilatedtri-methylolpropan tri-3-mercapto-propionate and mixtures thereof.

Thiols can also be used in the present invention in their deprotonated form.

Examples of suitable carboxylic acids and phosphonic acids for use in the present invention as a ligand are oleic acid, phenylphosphonic acid, hexylphosphonic acid, tetradecylphosphonic acid, octylphosphonic acid, octadecylphosphonic acid, propylenediphosphonic acid, phenylphosphonic acid, aminohexylphosphonic acid and mixtures thereof.

Carboxylic acids and phosphonic acids can also be used in the present invention in their deprotonated form.

Examples of other suitable ligands for use in the present invention are dioctyl ether, diphenyl ether, methyl myristate, octyl octanoate, hexyl octanoate, pyridine and mixtures thereof.

Suitable and selected ligands stabilize the NCs in a solution.

The NCs suitable for use in the present invention are prepared by using known processes from the literature or acquired commercially. Suitable NCs can be prepared in several ways of mixing all reactants together. The NCs according to the present invention can be produced from the various core materials alone or combined with various shell materials and various different kind of ligands.

Suitable commercially available NC for use in the present invention include, but not limited to CdSeS/ZnS from Sigma Aldrich.

A NC composite according to the present invention comprises the NCs from 0.01 to 10% by weight of the total weight of the NC composite, preferably from 0.05 to 7.5%, more preferably from 0.1 to 5%.

NC composites according to the present invention can also be prepared with higher NC quantity, however, if the quantity is >10% the optical properties of the QDs will be negatively affected due to interactions between them. On the other hand if the quantity is <0.01%, the formed films would exhibit very low brightness.

According to the present invention NCs are embedded into the polymeric matrix. Suitable polymeric matrix for the present invention is a polythiourethane (meth)acrylate matrix. The polythiourethane (meth)acrylate matrix is based on at least a (meth)acrylate monomer, a polyisocyanate compound and a polythiol compound.

The addition of (meth-)acrylate monomers enables the formulation to be partially UV cured through free radical step growth addition and free radical chain growth processes using a radical photoinitiator. Moreover, composition properties and mechanical properties of the final polymer can be modified accordingly with a wide range of (meth)acrylates and radical photoinitiators. The polythiourethane linkages are formed in a second step by thermal induced nucleophilic addition of polythiol compounds and polyisocyanate compounds. The polythiourethane (meth)acrylate matrix can be fully UV cured by using a photolatent base catalyst. The polythiourethane (meth)acrylate matrix according the present invention may also be fully cured by thermal cure with and without accelerators.

Polythiourethane (meth)acrylate matrix according to the present invention is formed from (meth)acrylate monomer having a functionality from 1 to 10, preferably from 1 to 8, more preferably from 1 to 6, and even more preferably from 2 to 6.

Preferably (meth)acrylate monomer is selected from the group consisting of 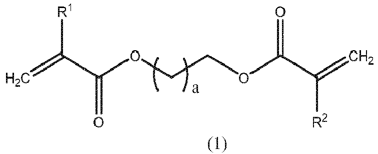 wherein a is 2 - 10, preferably a is 4-6, R¹ and R² are same or different and are independently selected from H, -CH₃ and -C₂H₅, preferably R¹ and R² are same or different and are independently selected from H and -CH₃; 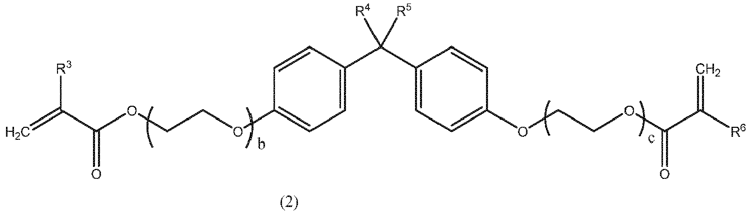 wherein b is 0 -10, c is 0 - 10, R³, R⁴, R⁵ and R⁶ are same or different and are independently selected from H, -CH₃ and -C₂H₅, preferably R³, R⁴, R⁵ and R⁶ are same or different and are independently selected from H and -CH₃; 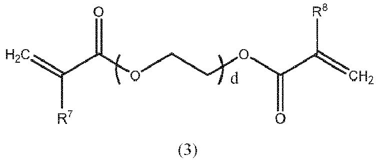 wherein d is 1 - 6, preferably 2-4, R⁷ and R⁸ are same or different and selected from H, - CH₃ and -C₂H₅, preferably R⁷ and R⁸ are selected from H and -CH₃; 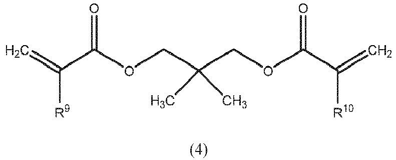 wherein R⁹ and R¹⁰ are same or different and selected from H, -CH₃ and -C₂H₅, preferably R⁹ and R¹⁰ are selected from H and -CH₃; 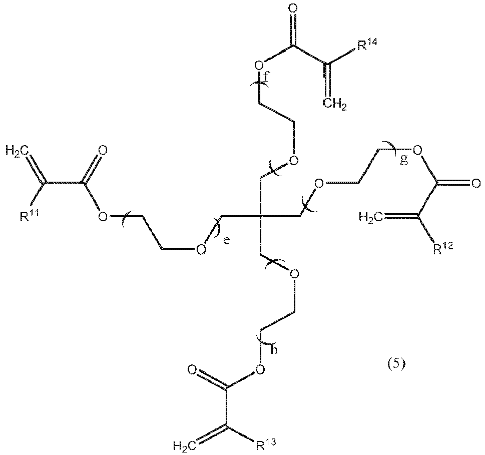 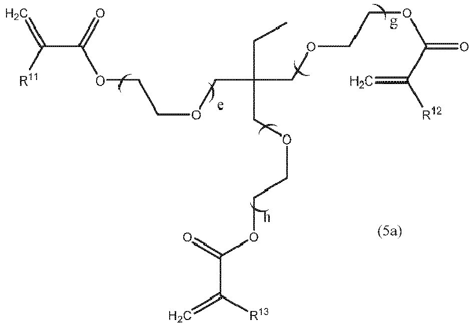 wherein e is 0 - 10, f is 0 - 10, g is 0 - 10, h is 0 - 10, R¹¹, R¹² , R¹³ and R¹⁴ are same or different and are independently selected from H, -CH₃ and -C₂H₅, preferably R¹¹, R¹², R¹³ and R¹⁴ are same or different and are independently selected from H and -CH₃; 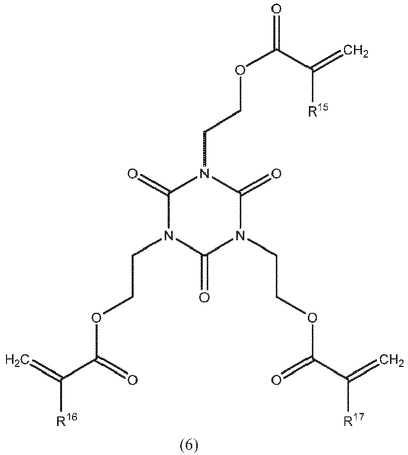 wherein, R¹⁵, R¹⁶ and R¹⁷ are same or different and are independently selected from H, - CH₃ and -C₂H₅, preferably R¹⁵, R¹⁶ and R¹⁷ are same or different and are independently selected from H and -CH₃; 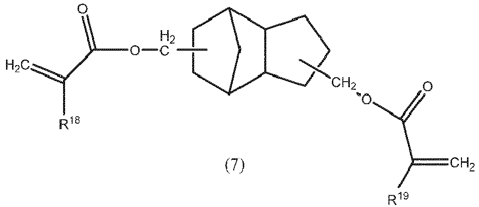 wherein, R¹⁸ and R¹⁹ are same or different and are independently selected from H, -CH₃ and -C₂H₅, preferably R¹⁸ and R¹⁹ are same or different and are independently selected from H and -CH₃; 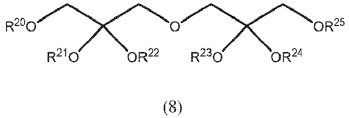 wherein R²⁰, R²¹, R²², R²³, R²⁴, R²⁵ are same or different and independently selected from H, 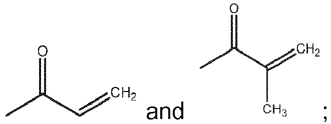 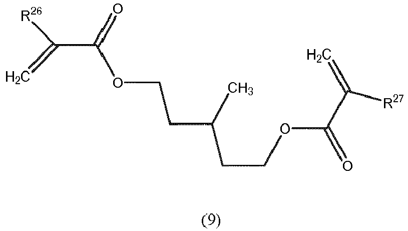 wherein R²⁶ and R²⁷ are same or different and independently selected from H, -CH₃ and - C₂H₅, preferably R²⁶ and R²⁷ are same or different and are independently selected from H and -CH₃; 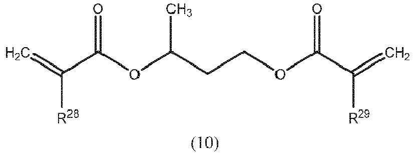 wherein R²⁸ and R²⁹ are same or different and independently selected from H, -CH₃ and - C₂H₅, preferably R²⁸ and R²⁹ are same or different and are independently selected from H and -CH₃; 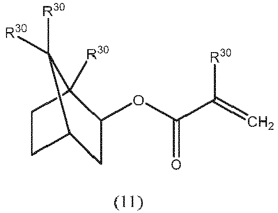 wherein R³⁰ is selected from H, CH₃ and C₂H₅, preferably R³⁰ is CH₃;
and mixtures thereof.

More preferably (meth)acrylate monomer is selected from the group consisting of isobornyl (meth)acrylate, pentaerythritol tetraacrylate, 1,6-hexanediol di(meth)acrylate, tricyclodecanedimethanol di(meth)acrylate, di-pentaerythritol hexa acrylate, tris[2-(acryloyloxy)ethyl] isocyanurate and mixtures thereof.

Above mentioned (meth)acrylates are preferred because they have relatively high Tg values and they provide better stability to the final NC composite.

Polythiourethane (meth)acrylate matrix according to the present invention comprises (meth)acrylate monomer from 10 to 65% by weight by total weight of the polymeric matrix, preferably from 15 to 50% and more preferably from 20 to 40%.

Suitable commercially available (meth)acrylate monomer for use in the present invention include, but not limited to SR238, SR423A and SR833S from Sartomer, and Photomer 4356, 4666 from IGM Resins.

A polythiourethane (meth)acrylate matrix according to the present invention is formed from polythiol compounds having a functionality from 2 to 10, preferably from 2 to 6, more preferably from 2 to 4. Functionality between 2 and 4 provides ideal crosslinking degree for the polymer.

Suitable polythiol compound for use in the present invention is selected from the group consisting of 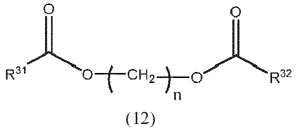 wherein n is 2 - 10, R³¹ and R³² are same or different and are independently selected from -CH₂-CH(SH)CH₃ and -CH₂-CH₂-SH; 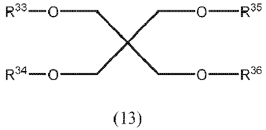 wherein R³³, R³⁴, R³⁵ and R³⁶ are same or different and are independently selected from - C(O)-CH₂-CH₂-SH, -C(O)-CH₂-CH(SH)CH₃, -CH₂-C(-CH₂-O-C(O)-CH₂-CH₂-SH)₃,-C(O)-CH₂-SH, -C(O)-CH(SH)-CH₃; 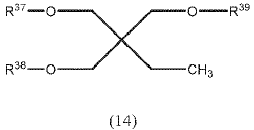 wherein R³⁷, R³⁸ and R³⁹ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH, -C(O)-CH(SH)-CH₃ and o is 1-10; 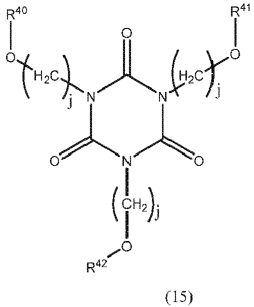 wherein j is 2-10, R⁴⁰, R⁴¹ and R⁴² are same or different and independently selected from - CH₂-CH₂SH, -CH₂-CH(SH)CH_{3,}-C(O)-CH₂-SH, -C(O)-CH(SH)-CH₃ and mixtures thereof.

More preferably polythiol is selected from the group consisting of glycol di(3-mercaptopropionate), pentaerythritol tetrakis (3-mercaptobutylate). 1,3,5-tris(3-mercaptobutyloxethyl)-1,3,5-triazine-2,4,6(1H,3H,5H)-trione, 1,4-bis(3-mercaptobutylyloxy) butane, tris[2-(3-mercaptopropionyloxy)ethyl]isocyanurate, pentaerythritol tetra(3-mercaptopropionate), trimethylolpropane tris(3-mercaptopropionate), trimethylolpropane tris(3-mercaptobutyrate) ethoxylatedtrimethylolpropan tri-3-mercaptopropionate, dipentaerythritol hexakis (3-mercaptopropionate) and mixtures thereof.

Preferred thiol compounds are desired due the fact that they provide appropriate viscosity and curing speed (within seconds to 1 hour). In addition, preferred polythiol compounds in combination with selected polyisocyates and NCs result in a film with the desired mechanical properties - a film, which is not too brittle or rubbery.

Suitable commercially available polythiol compounds for use in the present invention include, but not limited to KarenzMT™PE1 from Showa Denko and Thiocure®PETMP from Bruno Bock.

Polythiourethane (meth)acrylate matrix according to the present invention comprises polythiol compounds from 30 to 70% by weight by total weight of the polymeric matrix, preferably from 35 to 65% and more preferably from 20 to 40%.

Polythiourethane (meth)acrylate matrix according to the present invention is formed from polyisocyanate compounds having a functionality from 2 to 4, preferably from 2 to 3.

Suitable polyisocyanate compounds for use in the present invention are selected from polyisocyanates based on isocyanate compounds selected from the group consisting of 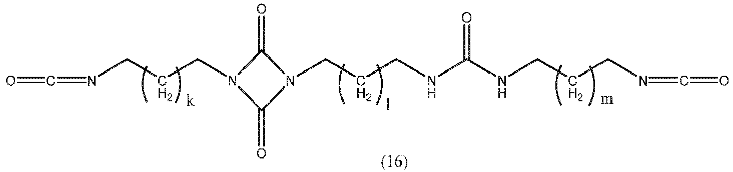 wherein k, l and m are same or different and have a value 2-10; 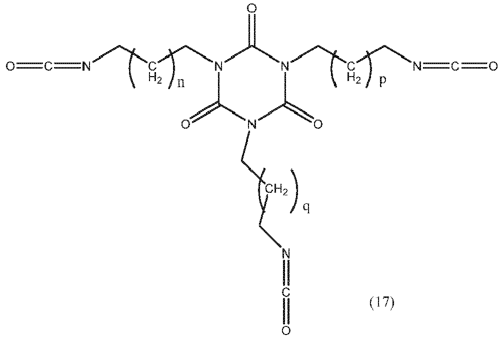 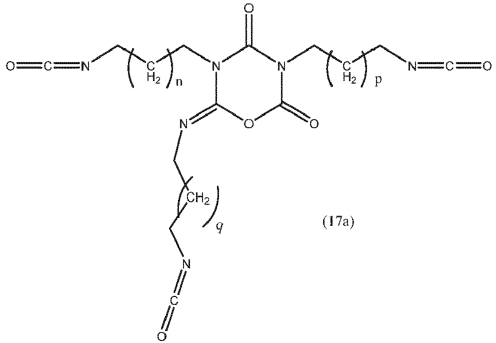 wherein n, p and q are same or different and have a value 2-10, preferably n, p and q are 6; 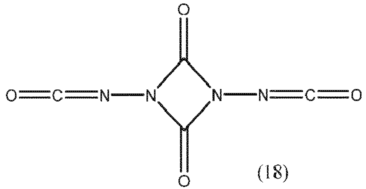 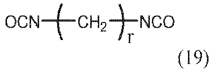 wherein r has a value 2 - 10; 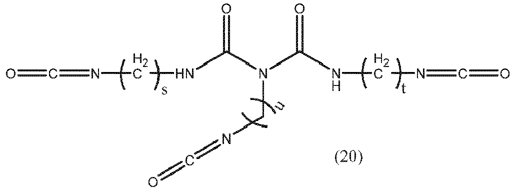 wherein s, t and u are same or different and have a value 2-10, preferably a value 4-6, and more preferably s, t and u are 6;
polyisocyanates based on toluene diisocyanate; polyisocyanates based on methylene diphenyl diisocyanate; polyisocyanates based on isophorone diisocyanate; prepolymers based on toluene diisocyanate; prepolymers based on methylene diphenyl diisocyanate; prepolymers based on isophorone diisocyanate, prepolymers based on hexamethylene diisocyanate and mixtures thereof.

Preferably, suitable polyisocyanate compound is based on isocyanate selected from the group consisting of 2,2'-diphenylmethane diisocyanate, 2,4'- diphenylmethane diisocyanate, 4,4'- diphenylmethane diisocyanate, 4,4'-diisocyanatodicyclohexylmethane, 1,6'-hexamethylene diisocyanate, 2,4'-diisocyanatotoluene, 2,6'-diisocyanatotoluene, and mixtures thereof. Particularly preferred diisocyanate is 1,6'-hexamethylene diisocyanate.

Above mentioned isocyanates are preferred because they are clear and colourless and do not tend to turn yellow over the period of time.

Polyisocyanate compound based on hexamethylene diisocyanate (HDI), formula (19) wherein r is 6, is preferred, because polyisocyanates based on HDI are solvent-free, have a low viscosity, provide fast curing speed and desired mechanical properties. In addition, polyisocyanates based on HDI are transparent, and therefore, suitable and desired for use in NC composites, wherein good optical properties are required.

Suitable commercially available polyisocyanate compounds for use in the present invention include, but not limited to Desmodur N3200, Desmodur N3900 and Desmodur XP2860, from Covestro, formerly Bayer MaterialScience.

Polythiourethane (meth)acrylate matrix according to the present invention comprises polyisocyanate compound from 5 to 90% by weight by total weight of the polymeric matrix, preferably from 10 to 75% and more preferably from 20 to 65%.

In a preferred embodiment the final mol% ratio of polythiourethane : (meth)acrylate-thiol : excess thiol in a polymeric matrix according to the present invention is 60:30:10.

A NC composite according to the present invention comprises polymer matrix from 90 to 99.99% by weight of the total weight of the composite, preferably from 92.5 to 99.95%, more preferably from 95 to 99.9%.

The Applicant has found out that combination of selected polythiol and polyisocyanate compounds provide a good performance polythiourethanes. Selected (meth)acrylates act as a reactive diluent and have a positive effect on viscosity and surface tension. In addition, they improve mechanical properties of the cured polymeric matrix. The overall combination of selected components used in the polymeric matrix according to the present invention provides good mechanical properties and good thermal and photothermal stability to the NCs.

The NC composites according to the present invention may be cured by a thermal and/or UV cure. In one embodiment, the NC composite is cured thermally, without the presence of an accelerator. In another embodiment, the NC composite is cured thermally in the presence of an accelerator. Yet in another embodiment the NC composite is cured via UV cure in the presence of a photolatent base. Yet in another embodiment the NC composite is cured in two step curing process, first step being done in the presence of a radical photoinitiator followed by thermal cure step with or without the presence of the accelerator.

The NC composite according to the present invention may further comprise an accelerator to accelerate the polymerisation reaction.

Suitable accelerator for use in the present invention is a base, preferably an organic base such as diethylamine or triethylamine.

Suitable commercially available accelerator for use in the present invention include, but not limited to diethylamine or triethylamine from Sigma-Aldrich.

A NC composite according to the present invention may comprise an accelerator from 0 to 5% by weight of the total weight of the NC composite, preferably from 0.001 to 5%, more preferably from 0.01 to 3% and more preferably from 0.01 to 2%.

The NC composite according to the present invention may further comprise a radical photoinitiator.

Suitable radical photoinitiators for use in the present invention are for example 2-methyl-4-(methylthio)-2-morpholinopropiophenone, 2-(9-Oxoxanthen-2-yl)propionic acid-1,5,7 triazabicyclo[4.4.0]dec-5-ene and isopropylthioxanthone (ITX), 2-hydroxy-2-methylpropiophenone, diphenyl(2,4,6-trimethylbenzoyl)phosphine oxide, ethyl (2,4,6-trimethylbenzoyl) phenylphosphinate, and mixtures thereof.

Suitable commercially available radical photoinitiators for use in the present invention include, but not limited to diphenyl(2,4,6-trimethylbenzoyl)phosphine oxide (TPO) and ethyl (2,4,6-trimethylbenzoyl) phenylphosphinate (L-TPO) from IGM.

A NC composite according to the present invention may comprise a radical photoinitator from 0 to 5% by weight of the total weight of the NC composite, preferably from 0.01 to 5%, more preferably from 0.01 to 3% and more preferably from 0.01 to 2%.

The NC composites according to the present invention may further comprise a photolatent base.

Suitable photolatent bases for use in the present invention are for example 1,5,7-triazabicyclo[4.4.0]dec-5-ene · hydrogen tetraphenyl borate (TBD·HBPh₄), 2-benzyl-2-(dimethylamino)-1-(4-methoxyphenyl)butan-1-one, 2-benzyl-2-dimethylamino-4'-morpholinobutyrophenone or 2-dimethylamino-2-(4-methyl-benzyl)-1-(4-morpholin-4-yl-phenyl)-butan-1-one.

Suitable commercially available photolatent base for use in the present invention include, but not limited to 2-benzyl-2-(dimethylamino)-1-(4-methoxyphenyl)butan-1-one (Pix 15-080), 2-benzyl-2-dimethylamino-4'-morpholinobutyrophenone (Omnirad 369) or 2-dimethylamino-2-(4-methyl-benzyl)-1-(4-morpholin-4-yl-phenyl)-butan-1-one (Omnirad 379), all from IGM.

A NC composite according to the present invention may comprise a photolatent base from 0 to 5% by weight of the total weight of the NC composite, preferably from 0.01 to 5%, more preferably from 0.01 to 3% and more preferably from 0.01 to 2%.

The NC composites according to the present invention can be prepared in several ways of mixing all ingredients together.

In one embodiment, the preparation of the NC composites according to the present invention comprises the following steps:
1) mixing NCs and polyisocyanates;
2) adding polythiols and (meth)acrylates and mixing;
3) curing with UV light and/or electron beam and/or temperature.

In another embodiment, the preparation of the NC composites according to the present invention comprises the following steps:
1) mixing NCs, (meth)acrylate and polythiols;
2) adding polyisocyanates and mixing;
3) curing with UV light and/or electron beam and/or temperature.

Yet, in another embodiment, the preparation of the NC composites according to the present invention comprises the following steps:
1) mixing polyisocyanates, (meth)acrylates and polythiols;
2) adding NCs and mixing;
3) curing with UV light and/or electron beam and/or temperature.

In preferred embodiment, NCs are added to a mixture of (meth)acrylates, polythiols and polyisocyanates.

Thermal curing temperature is preferably from 20 °C to 250 °C, more preferably from 80 °C to 125 °C. In addition, thermal curing time is preferably from 1 minute to 48 hour, more preferably from 1 minute to 24 hours and even more preferably from 5 minutes to 2 hours.

Photo curing UV intensity is preferably from 1 to 1000 mW/cm², more preferably from 50 to 500 mW/cm². In addition, photo curing time is preferably from 1 second to 500 seconds, more preferably from 1 second to 60 seconds.

As shown in the examples below, the polythiourethane (meth)acrylate matrix provides improved thermal and photo thermal stability when compared to prior art. This can be attributed to their better stability against oxidation during the accelerated operating conditions, opening the possibility to reduce the barrier requirements towards a barrier-free configuration.

In one embodiment according to the present invention, the NC composite may form a layered film together with barrier films - meaning that the NC composite is embedded between two barrier films. Instead of using high quality, sophisticated barrier films as described in the prior art, the Applicant has found out that the NC composites according to the present invention perform well with low performance barrier films, such as PET barrier films. Food grade PET barrier films are suitable and preferred due the fact that they are thin enough. Ordinary PET barrier films would reduce the costs, however, they are relatively thick, and therefore, not ideal for use in the present invention. The Applicant has discovered that the use of thin, food grade PET barrier films reduces material and manufacturing costs.

Furthermore, less space will be required in the implementation of the NC composite in a light down-conversion device.

The present invention also covers a cured NC composite according to the present invention.

NC composites according to the present invention are solid at room temperature after the cure.

A NC-composite according to the present invention have NCs embedded into the polymer matrix. NCs are solid and integral part of the network structure. The structure allows maintenance of the optical properties of the NCs. In addition, the structure provides improved thermal and photothermal stability. Generally, the polythiourethane (meth)acrylate matrix according to the present invention provides improved protection against oxidation and/or other degradation processes vs. polymeric matrices described in the literature.

The NC composite according to the present invention can be used in various products. Some examples are for example a display device, a light emitting device, a photovoltaic cell, a photodetector, an energy converter device, a laser, a sensor, a thermoelectric device, a security ink, lighting device and in catalytic or biomedical applications.

The NC composite according to the present invention can be used as a source of photoluminescence.

### Examples

### Example 1:

0.65 g (27.5 wt.%) of aliphatic polyisocyanate (Desmodur N3200 from Covestro), 1.2 g (50.7 wt.%) of pentaerythritol tetra(3-mercaptopropionate) (Thiocure PETMP from Bruno Bock), 0.4 g (20.3 wt.%) of pentaerythritol [5 EO] tetraacrylate (Photomer 4172 from IGM Resins), 0.113 g (5.7 wt.%) of isobornyl acrylate (from Sigma Aldrich), 0.004 g (0.17 phr) of diphenyl(2,4,6-trimethylbenzoyl)phosphine oxide (from Sigma Aldrich), 0.0236 g (1 phr) micronized ZnS (Sachtolith HD-S from Sachtleben) and 0.0045 g (0.19 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for five minutes at 100°C until all isocyanates had reacted. A solid semiconductor NC composite with a thickness of 130 µm was obtained.

### Example 2:

0.55 g (24.4 wt.%) of aliphatic polyisocyanate (Desmodur N3200 from Covestro), 1.2 g (53.1 wt.%) of pentaerythritol tetra(3-mercaptopropionate) (Thiocure PETMP from Bruno Bock), 0.4 g (17.7 wt.%) of 1,6-hexanediol diacrylate (Photomer 4017 from IGM Resins), 0.108 g (4.7 wt.%) of isobornyl acrylate (from Sigma Aldrich), 0.004 g (0.18 phr) of diphenyl(2,4,6-trimethylbenzoyl)phosphine oxide (from Sigma Aldrich), 0.0226 g (1 phr) micronized ZnS (Sachtolith HD-S from Sachtleben) and 0.0043 g (0.19 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for five minutes at 100°C until all isocyanates had reacted. A solid semiconductor NC composite with a thickness of 130 µm was obtained.

### Example 3 (comparative):

1.0 g (47.6 wt.%) of aliphatic polyisocyanate (Desmodur N3200 from Covestro) and 1.0 g (47.6 wt.%) of pentaerythritol tetra(3-mercaptopropionate) (Thiocure PETMP from Bruno Bock), 0.1 g (4.8 wt.%) of isobornyl acrylate (from Sigma Aldrich), 0.021 g (1 phr) micronized ZnS (Sachtolith HD-S from Sachtleben) and 0.004 g (0.19 phr) of semiconductor NC (CdSe/ZnS λₑₘ: 626 nm) were mixed in a conditioning mixer for two minutes at 3500 rpm. Subsequently, the resulting mixture was laminated between standard PET substrates (CT7 from MacDermid) using an in-house lamination machine. Afterwards, the formulation was thermally cured for five minutes at 100°C until all isocyanates has been reacted. A solid semiconductor NC composite with a thickness of 130 µm was obtained.

### Example 4 (comparative):

1.0 g (47.6 wt.%) deca-functional urethane oligomer (Photomer 6635 from IGM Resins), 0.5 g (23.8 wt.%) 1,6-hexanediol diacrylate (Photomer 4017 from IGM Resins), 0.6 g (28.6 wt.%) isobornyl acrylate (from Sigma Aldrich), 0.01 g (0.47 phr) of diphenyl(2,4,6-trimethylbenzoyl)phosphine oxide (from Sigma Aldrich), 0.021 g (1 phr) micronized ZnS (Sachtolith HD-S from Sachtleben) and 0.004 g (0.19 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². A solid semiconductor NC composite with a thickness of 130 µm was obtained.

The photoluminescent QY evolution of all NC composites (sample diameter 1.9 cm) were studied under different experimental conditions:
A NC-composite was aged in a box oven at 85°C. The absolute QY was tracked for six weeks and the test results are shown in table 1 below.

The absolute quantum yield is measured by using Absolute quantum yield spectrometer C9920-02G from Hamamatsu Photonics.

**Table 1: Absolute quantum yield evolution of NC-composites at 85°C**

| | ***Day 0*** | ***Day 1*** | ***Day 7*** | ***Day 14*** | ***Day 21*** | ***Day 42*** |
|---|---|---|---|---|---|---|
| Example 1 | 79.3 % | 74.5 % | 75.9 % | 76.5 % | 76.6 % | 77.0 % |
| Example 2 | 78.1 % | 75.6 % | 75.9 % | 76.7 % | 76.7 % | 75.9 % |
| Example 3 (comparative) | 80.5 % | 80.8 % | 77.8 % | 76.1 % | 75.2 % | 74.9 % |
| Example 4 (comparative) | 68.5 % | 47.8 % | 31.6 % | 26.4 % | 24.7 % | 23.5 % |

Another NC-composite was aged in a custom-built photo-thermal ageing chamber at 350 mW/cm² at 75°C. The excitation wavelength was 460 nm. The QY evolution was tracked for six weeks, and the test results are shown in table 2 below.

**Table 2: Absolute quantum yield evolution of NC-composites at 350 mW/cm² + 75°C**

| | ***Day 0*** | ***Day 1*** | ***Day 7*** | ***Day 14*** | ***Day 21*** | ***Day 42*** |
|---|---|---|---|---|---|---|
| Example 1 | 79.3 % | 76.1 % | 69.6 % | 70.4 % | 69.7 % | 73.8 % |
| Example 2 | 76.2 % | 75.5 % | 74.6 % | 73.6 % | 73.0 % | 74.8 % |
| Example 3 (comparative) | 80.3 % | 80.4 % | 73.1 % | 71.3 % | 70.5 % | 75.0 % |
| Example 4 (comparative) | 69.4 % | 73.4 % | 67.2 % | 64.7 % | 60.5 % | 54.4 % |

### Example 5:

0.9 g (32.9 wt.%) of aliphatic polyisocyanate (Desmodur N3200 from Covestro), 1.2 g (43.9 wt.%) of pentaerythritol tetra(3-mercaptopropionate) (Thiocure PETMP from Bruno Bock), 0.5 g (18.3 wt.%) of tricyclodecanedimethanol diacrylate (SR833S from Sartomer), 0.13 g (4.7 wt.%) of isobornyl acrylate (from Sigma Aldrich), 0.005 g (0.18 phr) of diphenyl(2,4,6-trimethylbenzoyl)phosphine oxide (from Sigma Aldrich), 0.0273 g (1 phr) micronized ZnS (Sachtolith HD-S from Sachtleben), 0.0038 g (0.16 phr) of semiconductor NC (CdSe/ZnS λₑₘ: 525 nm) and 0.002 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for five minutes at 100°C until all isocyanates had reacted. A solid semiconductor NC composite with a thickness of 100 µm was obtained. The carrier substrate (CT7 from MacDermid) has been removed from the NC composite film.

### Example 6:

0.72 g (26.7 wt.%) of aliphatic polyisocyanate (Desmodur N3200 from Covestro), 1.2 g (44.4 wt.%) of pentaerythritol tetra(3-mercaptopropionate) (Thiocure PETMP from Bruno Bock), 0.65 g (24.1 wt.%) of tricyclodecanedimethanol diacrylate (SR833S from Sartomer), 0.127 g (4.7 wt.%) of isobornyl acrylate (from Sigma Aldrich), 0.0065 g (0.24 phr) of diphenyl(2,4,6-trimethylbenzoyl)phosphine oxide (from Sigma Aldrich), 0.027 g (1 phr) micronized ZnS (Sachtolith HD-S from Sachtleben), 0.0038 g (0.16 phr) of semiconductor NC (CdSe/ZnS λₑₘ: 525 nm) and 0.002 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for five minutes at 100°C until all isocyanates had reacted. A solid semiconductor NC composite with a thickness of 100 µm was obtained. The carrier substrate (CT7 from MacDermid) has been removed from the NC composite film.

### Example 7:

0.54 g (20.2 wt.%) of aliphatic polyisocyanate (Desmodur N3200 from Covestro), 1.2 g (45.0 wt.%) of pentaerythritol tetra(3-mercaptopropionate) (Thiocure PETMP from Bruno Bock), 0.8 g (30.0 wt.%) of tricyclodecanedimethanol diacrylate (SR833S from Sartomer), 0.127 g (4.7 wt.%) of isobornyl acrylate (from Sigma Aldrich), 0.008 g (0.3 phr) of diphenyl(2,4,6-trimethylbenzoyl)phosphine oxide (from Sigma Aldrich), 0.0267 g (1 phr) micronized ZnS (Sachtolith HD-S from Sachtleben), 0.0038 g (0.16 phr) of semiconductor NC (CdSe/ZnS λₑₘ: 525 nm) and 0.002 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for five minutes at 100°C until all isocyanates had reacted. A solid semiconductor NC composite with a thickness of 100 µm was obtained. The carrier substrate (CT7 from MacDermid) has been removed from the NC composite film.

The optical properties of all NC composites (sample diameter 1.9 cm; without carrier substrate) were studied under different experimental conditions.

A NC-composite was aged in a box oven at 85°C. The emission spectra was tracked for seven days and test results are shown for each sample in table 3 below. The emission spectra is measured by Absolute quantum yield spectrometer C9920-02G from Hamamatsu Photonics.

**Table 3: Emission peak change of NC-composites at 85°C**

| | ***Day 0*** | ***Day 7*** |
|---|---|---|
| Example 5 | 526 nm + 627 nm | 525 nm + 627 nm |
| Example 6 | 525 nm + 627 nm | 525 nm + 627 nm |
| Example 7 | 525 nm + 626 nm | 525 nm + 626 nm |

Another NC-composite was aged in a custom-built photo-thermal ageing chamber at 350 mW/cm² at 75°C. The excitation wavelength was 460 nm. The emission spectra was tracked for seven days and the test results are shown for each sample in table 4 below.

**Table 4: Emission peak change of NC-composites at 350 mW/cm² + 75°C**

| | ***Day 0*** | ***Day 7*** |
|---|---|---|
| Example 5 | 525 nm + 626 nm | 525 nm + 627 nm |
| Example 6 | 525 nm + 626 nm | 519 nm + 626 nm |
| Example 7 | 526 nm + 626 nm | 510 nm + 627 nm |

### Example 8:

0.9 g (31.6 wt.%) of aliphatic polyisocyanate (Desmodur N3200 from Covestro), 1.31 g (46.0 wt.%) of trimethylolpropane tris(3-mercaptopropionate) (Thiocure TMPMP from Bruno Bock), 0.5 g (17.6 wt.%) of tricyclodecanedimethanol diacrylate (SR833S from Sartomer), 0.136 g (4.7 wt.%) of isobornyl acrylate (from Sigma Aldrich), 0.005 g (0.17 phr) of diphenyl(2,4,6-trimethylbenzoyl)phosphine oxide (from Sigma Aldrich), 0.028 g (1 phr) micronized ZnS (Sachtolith HD-S from Sachtleben), 0.0038 g (0.16 phr) of semiconductor NC (CdSe/ZnS λₑₘ: 525 nm) and 0.002 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for 60 minutes at 100°C until all isocyanates had reacted. A solid semiconductor NC composite with a thickness of 100 µm was obtained.

### Example 9:

0.9 g (27.2 wt.%) of aliphatic polyisocyanate (Desmodur N3200 from Covestro), 1.75 g (52.9 wt.%) of (3-mercaptopropionyloxy)ethyl]isocyanurate (Thiocure TEMPIC from Bruno Bock), 0.5 g (15.1 wt.%) of tricyclodecanedimethanol diacrylate (SR833S from Sartomer), 0.158 g (4.7 wt.%) of isobornyl acrylate (from Sigma Aldrich), 0.005 g (0.15 phr) of diphenyl(2,4,6-trimethylbenzoyl)phosphine oxide (from Sigma Aldrich), 0.033 g (1 phr) micronized ZnS (Sachtolith HD-S from Sachtleben), 0.0044 g (0.16 phr) of semiconductor NC (CdSe/ZnS λₑₘ: 525 nm) and 0.0024 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for five minutes at 100°C until all isocyanates had reacted. A solid semiconductor NC composite with a thickness of 100 µm was obtained.

### Example 10:

0.9 g (31.3 wt.%) of aliphatic polyisocyanate (Desmodur N3200 from Covestro), 1.34 g (46.6 wt.%) of pentaerythritol tetrakis (3-mercaptobutylate) (KarenzMT PE1 from Show Denko), 0.5 g (17.4 wt.%) of tricyclodecanedimethanol diacrylate (SR833S from Sartomer), 0.137 g (4.7 wt.%) of isobornyl acrylate (from Sigma Aldrich), 0.005 g (0.17 phr) of diphenyl(2,4,6-trimethylbenzoyl)phosphine oxide (from Sigma Aldrich), 0.029 g (1 phr) micronized ZnS (Sachtolith HD-S from Sachtleben), 0.0038 g (0.16 phr) of semiconductor NC (CdSe/ZnS λₑₘ: 525 nm) and 0.002 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT7 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for 120 minutes at 100°C until all isocyanates had reacted. A solid semiconductor NC composite with a thickness of 100 µm was obtained.

### Example 11:

0.76 g (31.3 wt.%) of aliphatic polyisocyanate (Desmodur N3300 from Covestro), 1.05 g (43.3 wt.%) of pentaerythritol tetra(3-mercaptopropionate) (Thiocure PETMP from Bruno Bock), 0.5 g (20.6 wt.%) of tricyclodecanedimethanol diacrylate (SR833S from Sartomer), 0.116 g (4.7 wt.%) of isobornyl acrylate (from Sigma Aldrich), 0.005 g (0.21 phr) of diphenyl(2,4,6-trimethylbenzoyl)phosphine oxide (from Sigma Aldrich), 0.024 g (1 phr) micronized ZnS (Sachtolith HD-S from Sachtleben), 0.0032 g (0.16 phr) of semiconductor NC (CdSe/ZnS λₑₘ: 525 nm) and 0.0017 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT4 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for 120 minutes at 100°C until all isocyanates had reacted. A solid semiconductor NC composite with a thickness of 100 µm was obtained.

### Example 12:

0.7 g (29.6 wt.%) of aliphatic polyisocyanate (Desmodur N3900 from Covestro), 1.05 g (44.4 wt.%) of pentaerythritol tetra(3-mercaptopropionate) (Thiocure PETMP from Bruno Bock), 0.5 g (21.2 wt.%) of tricyclodecanedimethanol diacrylate (SR833S from Sartomer), 0.113 g (4.7 wt.%) of isobornyl acrylate (from Sigma Aldrich), 0.005 g (0.21 phr) of diphenyl(2,4,6-trimethylbenzoyl)phosphine oxide (from Sigma Aldrich), 0.024 g (1 phr) micronized ZnS (Sachtolith HD-S from Sachtleben), 0.0031 g (0.16 phr) of semiconductor NC (CdSe/ZnS λₑₘ: 525 nm) and 0.0017 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT4 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for 120 minutes at 100°C until all isocyanates had reacted. A solid semiconductor NC composite with a thickness of 100 µm was obtained.

### Example 13:

0.85 g (33.6 wt.%) of aliphatic polyisocyanate (Desmodur XP 2860 from Covestro), 1.06 g (41.9 wt.%) of pentaerythritol tetra(3-mercaptopropionate) (Thiocure PETMP from Bruno Bock), 0.5 g (19.7 wt.%) of tricyclodecanedimethanol diacrylate (SR833S from Sartomer), 0.121 g (4.7 wt.%) of isobornyl acrylate (from Sigma Aldrich), 0.005 g (0.2 phr) of diphenyl(2,4,6-trimethylbenzoyl)phosphine oxide (from Sigma Aldrich), 0.025 g (1 phr) micronized ZnS (Sachtolith HD-S from Sachtleben), 0.0033 g (0.16 phr) of semiconductor NC (CdSe/ZnS λₑₘ: 525 nm) and 0.0018 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT4 from MacDermid) using an in-house lamination machine equipped with a UV LED lamp (λₑₘ: 365 nm). The formulation was UV cured with a dosage of 0.4 J/cm². Afterwards, the partially cured semiconductor NC composite was thermally cured for 120 minutes at 100°C until all isocyanates had reacted. A solid semiconductor NC composite with a thickness of 100 µm was obtained.

### Example 14:

0.9 g (32.9 wt.%) of aliphatic polyisocyanate (Desmodur N3200 from Covestro), 1.2 g (43.9 wt.%) of pentaerythritol tetra(3-mercaptopropionate) (Thiocure PETMP from Bruno Bock), 0.5 g (18.3 wt.%) of tricyclodecanedimethanol diacrylate (SR833S from Sartomer), 0.13 g (4.7 wt.%) of isobornyl acrylate (from Sigma Aldrich), 0.0273 g (1 phr) of photolatent base (PIX 15-080 from IGM Resins), 0.0273 g (1 phr) micronized ZnS (Sachtolith HD-S from Sachtleben), 0.0038 g (0.16 phr) of semiconductor NC (CdSe/ZnS λₑₘ: 525 nm) and 0.002 g (0.08 phr) of semiconductor NC (CdSe/ZnS λₑₘ: 626 nm) were mixed in a conditioning mixer for six minutes at 3500 rpm. Subsequently, the resulting mixture was laminated between standard PET substrates (CT4 from MacDermid) using an in-house lamination machine. The formulation was UV cured with a dosage of 0.4 J/cm² (UVA) in a UV curing chamber. A solid semiconductor NC composite with a thickness of 100 µm was obtained. The carrier substrate (CT4 from MacDermid) has been removed from the NC composite film.

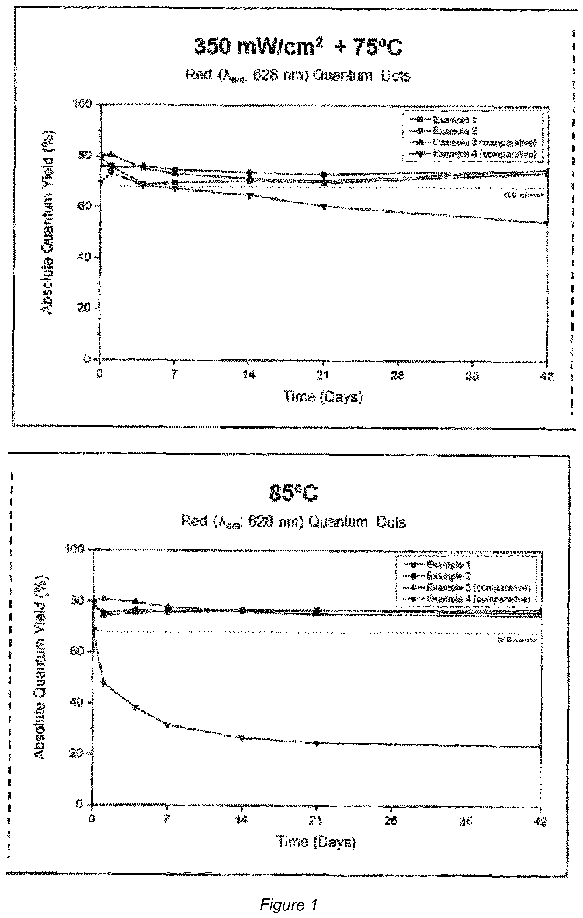

Figure 1 illustrates the performance of nanocomposites based on different chemistries containing CdSe/ZnS NCs. Polythiourethane (meth)acrylate composites (Example 1 and 2) according to the present invention provide similar high photothermal and thermal stability to the NC compared to polythiourethane matrix (Comparative Example 3) containing the same polythiols and polyisocyanates. The difference between polythiourethane (meth)acrylate matrices is the selected acrylate. For comparison, the pure acrylate matrix (Comparative Example 4) shows lower initial optical properties (e.g. absolute quantum yield) as well as much lower photothermal and thermal stability. In this examples the NC composites have a thickness of 130 µm and are sandwiched between standard PET films (CT7 from MacDermid) considered as a low performance barrier substrate.

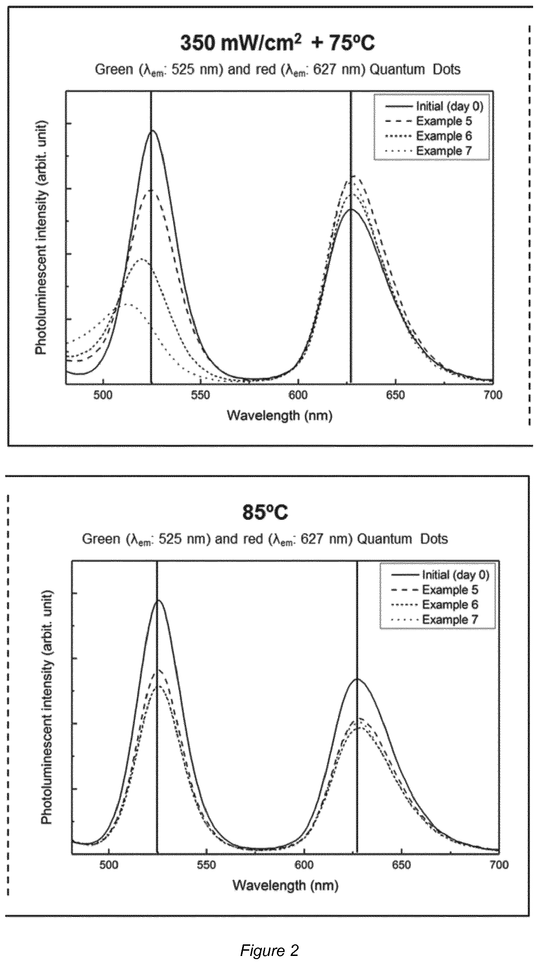

Photothermal and thermal stability of the polythiourethane (meth)acrylate NC composites depends on the ratio of the (meth-)acrylate(s), polyisocyanate(s) and the polythiol(s) used. This is illustrated in figure 2. Measured matrices have following mol% ratios of polythiourethane : acrylate-thiol : excess thiol: 50:40:10 (Example 5); 40:50:10 (Example 6); and 30:60:10 (Example 7). Figure 2 shows emission spectra, which indicates that the higher the amount of polythiourethane linkages in the adhesive matrix, the higher the photothermal stability. This trend can be observed since the used green emitting NC show lower initial stability compared to the red emitting ones. The film thicknesses of these NC composites (containing green and red emitting NC) are 100 µm and comprise of no additional carrier substrates.

## Claims

1. A nanocrystal composite comprising
a) a plurality of nanocrystals comprising a core comprising a metal or a semiconductive compound or a mixture thereof and at least one ligand, wherein said core is surrounded by at least one ligand,
b) a polymeric matrix, wherein said polymeric matrix is formed by polymerisation of at least one (meth)acrylate monomer having a functionality from 1 to 10 and a polythiol compound having a functionality from 2 to 10 and a polyisocyanate compound having a functionality from 2 to 4.

2. A nanocrystal composite according to claim 1, wherein said core comprising a metal or semiconductive compound or a mixture thereof is composed of elements selected from combination of one or more different groups of the periodic table, preferably said metal or semiconductive compound is combination of one or more elements selected from the group IV; one or more elements selected from the groups II and VI; one or more elements selected from the groups III and V; one or more elements selected from the groups IV and VI; one or more elements selected from the groups I and III and VI or a combination thereof, more preferably said metal or semiconductive compound is selected from the group consisting of Si, Ge, SiC, SiGe, CdS, CdSe, CdTe, ZnS, ZnSe ZnTe, ZnO, HgS, HgSe, HgTe, MgS, MgSe, GaN, GaP, GaSb, AlN, AlP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂, AgGaSe₂ and mixtures thereof, and even more preferably said metal or semiconductive compound is selected from group consisting of CdSe, InP and mixtures thereof.

3. A nanocrystal composite according to claim 1 or 2, wherein said core comprises a core and at least one monolayer or multilayer shell or wherein said core comprises a core and at least two monolayer and/or multilayer shells.

4. A nanocrystal composite according to any of claims 1 to 3, wherein said (meth)acrylate monomer has a functionality from 1 to 8, preferably from 1 to 6, more preferably from 2 to 6.

5. A nanocrystal composite according to any of claims 1 to 4, wherein said (meth)acrylate monomer is selected from the group consisting of 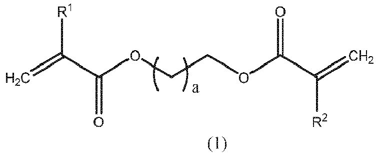 wherein a is 2 - 10, preferably a is 4-6, R¹ and R² are same or different and are independently selected from H, -CH₃ and -C₂H₅, preferably R¹ and R² are same or different and are independently selected from H and -CH₃; 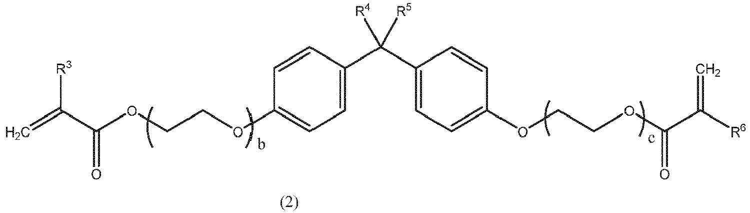 wherein b is 0 - 10, c is 0 - 10, R³, R⁴, R⁵ and R⁶ are same or different and are independently selected from H, -CH₃ and -C₂H₅, preferably R³, R⁴, R⁵ and R⁶ are same or different and are independently selected from H and -CH₃; 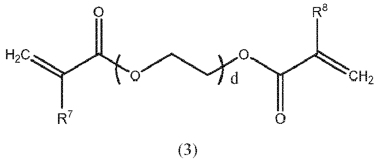 wherein d is 1 - 6, preferably 2-4, R⁷ and R⁸ are same or different and selected from H, -CH₃ and -C₂H₅, preferably R⁷ and R⁸ are selected from H and -CH₃; 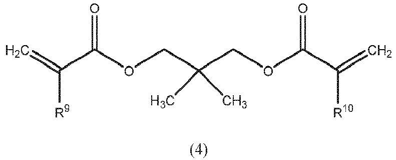 wherein R⁹ and R¹⁰ are same or different and selected from H, -CH₃ and -C₂H₅, preferably R⁹ and R¹⁰ are selected from H and -CH₃; 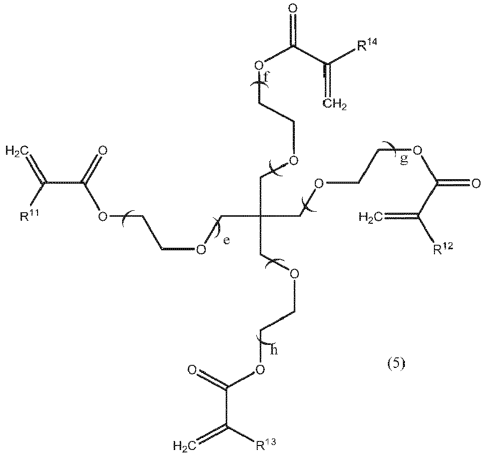 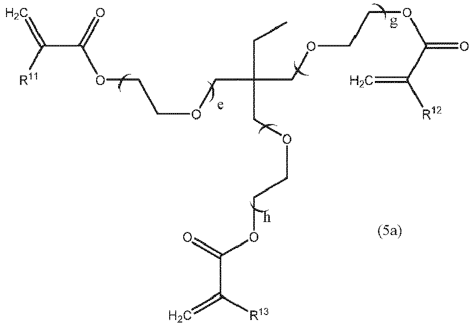 wherein e is 0 - 10, f is 0 - 10, g is 0 - 10, h is 0 -10, R¹¹, R¹², R¹³ and R¹⁴ are same or different and are independently selected from H, -CH₃ and -C₂H₅, preferably R¹¹, R¹² , R¹³ and R¹⁴ are same or different and are independently selected from H and - CH₃; 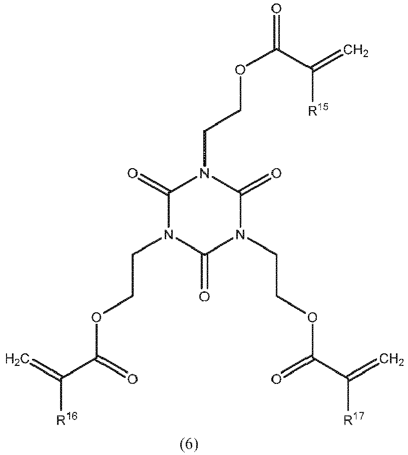 wherein, R¹⁵, R¹⁶ and R¹⁷ are same or different and are independently selected from H, -CH₃ and -C₂H₅, preferably R¹⁵, R¹⁶ and R¹⁷ are same or different and are independently selected from H and -CH₃; 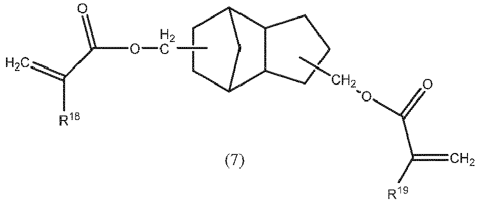 wherein, R¹⁸ and R¹⁹ are same or different and are independently selected from H, -CH₃ and -C₂H₅, preferably R¹⁸ and R¹⁹ are same or different and are independently selected from H and -CH₃; 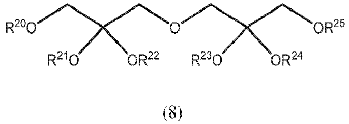 wherein R²⁰, R²¹, R²², R²³, R²⁴, R²⁵ are same or different and independently selected from H, 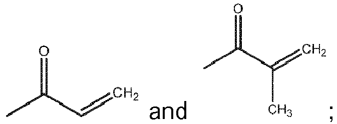 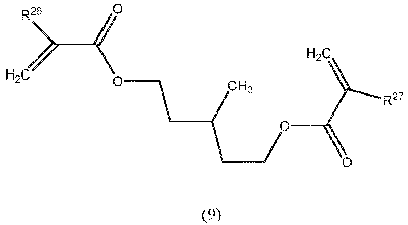 wherein R²⁶ and R²⁷ are same or different and independently selected from H, -CH₃ and -C₂H₅, preferably R²⁶ and R²⁷ are same or different and are independently selected from H and -CH₃; 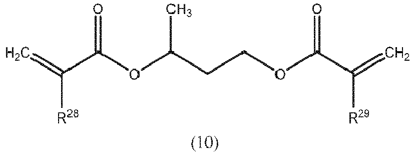 wherein R²⁸ and R²⁹ are same or different and independently selected from H, -CH₃ and -C₂H₅, preferably R²⁸ and R²⁹ are same or different and are independently selected from H and -CH₃; 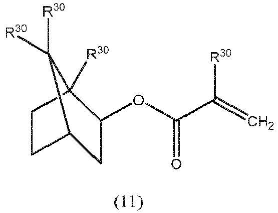 wherein R³⁰ is selected from H, CH₃ and C₂H₅, preferably R³⁰ is CH₃;
and mixtures thereof.

6. A nanocrystal composite according to any of claims 1 to 5, wherein said polythiol compound has a functionality from 2 to 6, more preferably from 2 to 4 and more preferably from 3 to 4.

7. A nanocrystal composite according to any of claims 1 to 6, wherein said polythiol compound is selected from the group consisting of 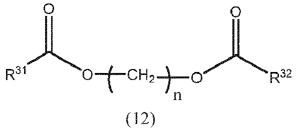 wherein n is 2 -10, R³¹ and R³² are same or different and are independently selected from -CH₂-CH(SH)CH₃ and -CH₂-CH₂-SH; 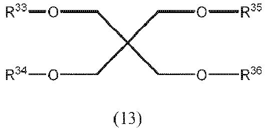 wherein R³³, R³⁴, R³⁵ and R³⁶ are same or different and are independently selected from -C(O)-CH₂-CH₂-SH, -C(O)-CH₂-CH(SH)CH₃, -CH₂-C(-CH₂-O-C(O)-CH₂-CH₂-SH)_{3,}-C(O)-CH₂-SH, -C(O)-CH(SH)-CH₃; 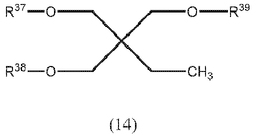 wherein R³⁷, R³⁸ and R³⁹ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH, -C(O)-CH(SH)-CH₃ and o is 1-10; 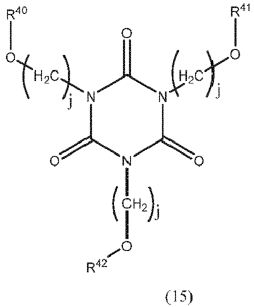 wherein j is 2-10, R⁴⁰, R⁴¹ and R⁴² are same or different and independently selected from -CH₂-CH₂SH, -CH₂-CH(SH)CH₃, -C(O)-CH₂-SH, -C(O)-CH(SH)-CH₃ and mixtures thereof.

8. A nanocrystal composite according to any of claims 1 to 7, wherein said polyisocyanate compound has a functionality from 2 to 3.

9. A nanocrystal composite according to any of claims 1 to 8, wherein said polyisocyanate compound are selected from polyisocyanates based on isocyanate compounds selected from the group consisting of 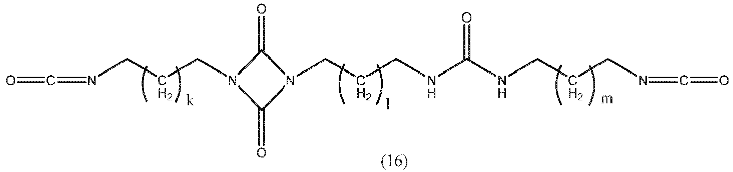 wherein k, I and m are same or different and have a value 2-10; 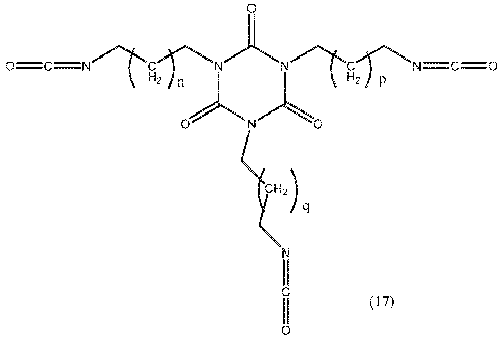 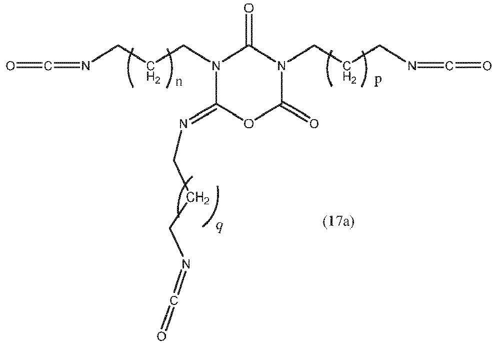 wherein n, p and q are same or different and have a value 2-10, preferably n, p and q are 6; 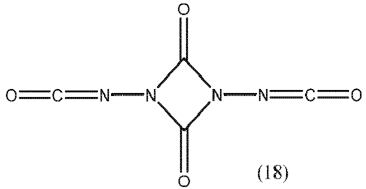 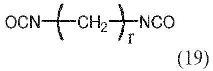 wherein r has a value 2 - 10; 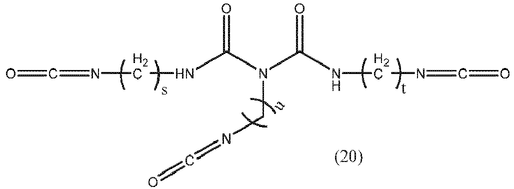 wherein s, t and u are same or different and have a value 2-10, preferably a value 4-6, and more preferably s, t and u are 6;
polyisocyanates based on toluene diisocyanate; polyisocyanates based on methylene diphenyl diisocyanate; polyisocyanates based on isophorone diisocyanate; prepolymers based on toluene diisocyanate; prepolymers based on methylene diphenyl diisocyanate; prepolymers based on isophorone diisocyanate, prepolymers based on hexamethylene diisocyanate and mixtures thereof.

10. A nanocrystal composite according to any of claims 1 to 9 comprising said nanocrystals from 0.01 to 10% by weight of the total weight of the composite, preferably from 0.05 to 7.5%, more preferably from 0.1 to 5%.

11. A nanocrystal composite according to any of claims 1 to 10 comprising polymer matrix from 90 to 99.99% by weight of the total weight of the composite, preferably from 92.5 to 99.95%, more preferably from 95 to 99.9%.

12. A cured nanocrystal composite according to any of claims 1 to 11.

13. A product comprising a nanocrystal composite according to any of claims 1 to 11 or a cured nanocrystal composite according to claim 12, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

14. Use of nanocrystal composite according to any of claims 1 to 12 as a source of photoluminescence.
